# FASCICULE DE BREVET EUROPEEN

(11) **EP 0 427 613 B1**
(45) Date de publication et mention de la délivrance du brevet: **26.01.1994**
(21) Numéro de dépôt: 90403138.2
(22) Date de dépôt: 06.11.1990
(51) Int. Cl.: H01R 13/52, G02B 6/38

(54) **Dispositif d'étanchéité d'entrée de câble dans un élément de connecteur alvéolaire multicontacts**
Dichtungsvorrichtung für Kabeleinführung in einen zelligen mehrpoligen Verbinder
Sealing arrangement for cable entry into an alveolar multicontact connector

(30) Priorité: 06.11.1989 FR 8914500
(43) Date de publication de la demande: 15.05.1991
(73) Titulaire: RADIALL Société anonyme dite:, 93116 Rosny sous Bois (FR)
(72) Inventeur: Marie, Alain Jean Lucien, F-94320 Thiais (FR)
(74) Mandataire: Leszczynski, André

(56) Documents cités:
- EP-A- 0 216 643
- FR-A- 2 407 579
- GB-A- 2 111 243

## Description

La présente invention est relative à un dispositif permettant d'assurer une étanchéité d'entrée d'un câble, notamment un câble optique, dans un élément de connecteur alvéolaire multicontacts, étanche, du type comportant un corps isolant pourvu d'une pluralité d'alvéoles agencées pour recevoir et retenir des contacts montés à l'extrémité de câbles et un tapis d'étanchéité, en matériau élastiquement déformable, disposé sur une face du corps isolant et présentant une pluralité de passages en regard des alvéoles, chacun des passages étant aligné avec une alvéole, extensible élastiquement en sens radial lors de l'introduction d'un câble et agencé et dimensionné pour entourer à ajustement serré et retenir de manière étanche le câble introduit, voir p.ex. EP-A-0 216 643.

De tels éléments de connecteur sont connus et utilisés pour des câbles électriques dans différentes applications, notamment dans le domaine aéronautique.

Les passages dans les tapis d'étanchéité présentent des dimensions et des formes adaptées à des câbles électriques à mettre en place, pour obtenir une retenue étanche optimale de ces câbles, lesdits câbles pouvant avoir un diamètre extérieur compris par exemple entre 1,6 et 2,7 mm pour un contact de taille 16.

Un problème d'étanchéité se pose lorsque l'on désire mettre en place dans le même élément de connecteur des câbles présentant un diamètre extérieur plus faible, notamment des câbles optiques, pour réaliser dans le même connecteur, d'une part des connexions électriques et d'autre part des connexions de fibres optiques.

En effet, dans ce cas, l'effet de compression réalisé sur la gaine extérieure du câble de plus faible diamètre au niveau des passages du tapis d'étanchéité est trop faible pour assurer une étanchéité parfaite autour du câble, notamment dans des applications où un différentiel de pression important peut exister entre l'extérieur et l'intérieur de l'élément de connecteur.

A titre d'exemple, on peut citer le cas de connecteurs utilisés pour des câblages, notamment de planches de bord, de véhicules non pressurisés tels que par exemple des avions de combat.

Dans ce cas, des contaminants, notamment des fluides peuvent pénétrer à l'intérieur des alvéoles du connecteur et nuire à la qualité de la connexion réalisée.

En outre, lors de la connexion de câbles optiques utilisant des contacts comportant un ressort de compression destiné à assurer un appui axial de la face d'extrémité de la fibre optique contre la face d'extrémité de la fibre optique à connecter, les efforts exercés par le tapis d'étanchéité sur le câble optique mis en place dans un passage de celui-ci nuisent à la qualité de la liaison optique.

La présente invention se propose de réaliser un dispositif permettant d'assurer une excellente étanchéité d'entrée de câbles, notamment de câbles optiques, présentant un diamètre extérieur plus faible que le diamètre extérieur des câbles électriques pour lesquels est conçu l'élément de connecteur étanche, sans aucune modification de ce dernier ce qui permet ainsi de mettre en place dans un même élément de connecteur des câbles de diamètres différents, notamment des câbles électriques dans certaines alvéoles et des câbles optiques dans d'autres.

Le dispositif selon l'invention se caractérise par le fait qu'il comprend un manchon rigide monté à jeu autour du câble et d'une partie du contact monté à l'extrémité du câble, ledit manchon rigide présentant une longueur supérieure à l'épaisseur du tapis d'étanchéité de façon à dépasser, en position engagée dans le passage du tapis d'étanchéité, au moins à l'arrière du tapis, et une douille montée autour d'une partie du manchon rigide et d'une partie du câble en arrière dudit manchon rigide, ladite douille solidaire de manière étanche par sa partie avant du manchon et par sa partie arrière du câble étant élastiquement déformable dans la partie intermédiaire entre lesdites parties avant et arrière.

Le manchon rigide dans son tronçon destiné à traverser le tapis d'étanchéité présente de préférence un diamètre extérieur égal au diamètre extérieur maximum des câbles pour lesquels les passages du tapis d'étanchéité sont conçus de manière à permettre une retenue à force et sans jeu du manchon rigide dans le tapis d'étanchéité.

Ainsi, si le câble optique, en position montée, est amené à reculer, ce recul provoque un allongement élastique en sens axial, sans glissement, de la douille solidaire du câble et du manchon rigide, tandis que ce dernier reste immobile en étant retenu à force dans le passage correspondant du tapis d'étanchéité.

On peut ainsi utiliser le dispositif selon l'invention pour la connexion d'un câble optique comportant un contact femelle d'un type connu dans lequel la fibre optique est immobilisée dans un embout l'extrémité coulissant à l'encontre d'un ressort de compression dans un corps tubulaire de contact immobilisé axialement dans une alvéole du corps isolant de l'élément de connecteur.

Dans ce cas, lors de l'introduction de l'embout du contact mâle complémentaire comportant une fibre optique à accoupler, il se produit un recul de l'embout comportant la fibre optique du contact femelle à l'encontre de son ressort de compression et donc un coulissement vers l'arrière du câble solidaire de cet embout.

L'allongement sans glissement mentionné ci-dessus de la douille élastique en combinaison avec la présence du manchon rigide autorise ce mouvement de recul du câble sans perte d'étanchéité dans la zone d'entrée du câble dans l'élément de connecteur.

Dans le cas où l'orifice d'entrée du passage traversant le tapis d'étanchéité présente un diamètre supérieur au diamètre extérieur du tronçon avant du manchon rigide destiné à s'engager dans le passage du tapis d'étanchéité, le manchon rigide présente avantageusement en arrière de ce tronçon avant un tronçon intermédiaire de plus grand diamètre, correspondant au moins au diamètre d'entrée du passage.

La douille élastiquement déformable peut avantageusement présenter une forme générale de "tétine" et comporter une partie avant de plus grand diamètre, pourvu le cas échéant de moyens d'accrochage destinés à coopérer avec des moyens d'accrochage prévus sur la partie d'extrémité arrière du manchon rigide, et une partie arrière d'un diamètre intérieur nominal inférieur au diamètre extérieur du câble pour s'appliquer élastiquement à force sur toute sa longueur sur le câble.

D'autres avantages et caractéristiques de l'invention apparaîtront à la lecture de la description suivante d'un exemple de réalisation en se référant au dessin annexé dans lequel :
- la figure 1 est une vue partielle en coupe d'un élément de connecteur étanche conventionnel illustrant la mise en place d'un câble électrique muni d'un contact d'extrémité, et
- la figure 2 est une vue schématique en coupe du même élément de connecteur étanche illustrant la connexion de câbles optiques en mettant en oeuvre le dispositif selon l'invention.

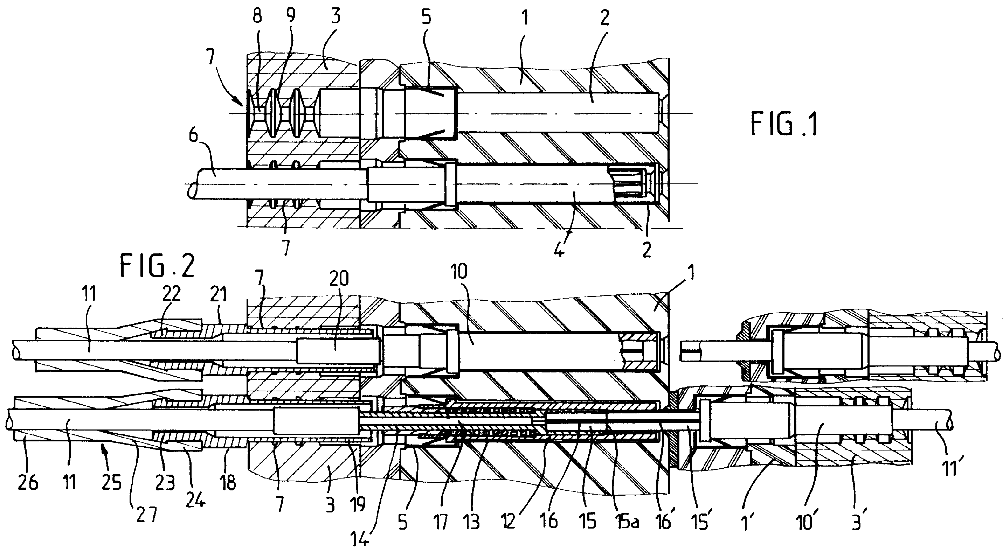

En se référant à la figure 1, on voit en coupe partielle schématique un corps isolant 1 d'élément de connecteur dans lequel sont réalisées des alvéoles 2, un tapis d'étanchéité 3 étant disposé sur un côté du corps isolant 1.

L'alvéole supérieure 2 est représentée vide, tandis que l'alvéole inférieure contient un contact électrique femelle 4 retenu dans l'alvéole 2 par un clip de retenue conventionnel 5. Le contact 4 est fixé à l'extrémité d'un câble électrique 6 traversant le tapis d'étanchéité 3 en y étant retenu à l'intérieur d'un passage désigné globalement par 7, aligné avec l'alvéole 2 et que l'on voit le mieux à la partie supérieure de la figure 1.

Ce passage comprend un conduit central 8 de diamètre inférieur au diamètre extérieur du plus petit câble à mettre en place et une pluralité d'évidements concentriques 9 de forme générale tronconique dont le plus grand diamètre est légèrement supérieur à celui du câble le plus gros à mettre en place, le dessin montrant un tel évidement tronconique débouchant à l'entrée du passage 7 et deux ensembles de tels évidements tronconiques réunis par leur base.

Ces évidements 9 de plus grand diamètre permettent une expansion radiale du conduit central 8 lors de l'introduction d'un câble 6 présentant un diamètre plus grand que le diamètre du conduit 8.

Ainsi, comme on le voit à la partie inférieure de la figure 1, une fois le câble introduit dans le passage 7, il s'y trouve retenu à ajustement serré et à force du fait de la nature élastique du tapis d'étanchéité 3, généralement réalisé en un matériau élastomère.

On retrouve à la figure 2 une coupe partielle de l'élément de connecteur illustré à la figure 1 avec deux alvéoles 2 utilisées pour la connexion de câbles à fibre optique, la liaison optique étant illustrée à l'état non accouplé dans l'alvéole supérieure et à l'état accouplé dans l'alvéole inférieure.

L'invention est illustrée pour un contact optique femelle 10 mis en place à l'extrémité d'un câble optique 11 qui, comme on le voit sur le dessin, présente un diamètre de gaine extérieure, inférieure au diamètre de gaine extérieure du plus gros câble électrique 6 pour lequel est conçu l'élément de connecteur.

Le contact femelle 10 comporte un corps de contact tubulaire extérieur 12 immobilisé dans l'alvéole de manière conventionnelle par un clip de retenue 5.

A l'intérieur de ce corps tubulaire extérieur 12, coulisse à l'encontre d'un ressort de compression 13, un fourreau 14 à l'extrémité duquel est fixé un embout 15 à l'extrémité 15a duquel affleure l'extrémité de la fibre optique 16 du câble 11.

La fibre optique est immobilisée, notamment par collage, dans la partie d'extrémité de l'embout 15 et la gaine intermédiaire 17 du câble est également fixée par collage dans le trou axial du fourreau 14.

Ainsi, lorsque l'embout 15 est amené à reculer pour la connexion, comme illustré à la partie inférieure de la figure 2, par introduction d'un embout 15 d'un élément de contact optique mâle 10', introduit dans l'alvéole d'un élément de connecteur étanche complémentaire 1', 3' pour la connexion à la fibre optique 16 d'une fibre optique 16' d'un câble optique 11', l'embout 15 et les éléments du contact femelle 10 qui en sont solidaires reculent à l'encontre du ressort 13 dans le corps de contact tubulaire 12, ce qui provoque le recul du câble 11 vers l'arrière, comme on s'en rend compte en comparant les positions de celui-ci en haut et en bas dans la figure 2.

Pour permettre ce recul sans perte d'étanchéité au niveau de l'entrée dans l'élément de connecteur, il est d'abord prévu selon l'invention un manchon rigide 18, réalisé par exemple en acier inoxydable, comportant un tronçon avant 19 de diamètre extérieur correspondant sensiblement au diamètre extérieur du plus gros câble électrique 6 illustré dans la figure 1, ce tronçon 19 présentant de préférence une longueur un peu plus grande que l'épaisseur du tapis d'étanchéité 3. L'extrémité avant du manchon dépasse ainsi, dans le mode de réalisation illustré, dans l'alvéole du corps isolant et entoure avec jeu sur toute sa longueur le câble 11 et la partie arrière 20 du contact 10 entourant la gaine extérieure du câble 11.

En arrière de son tronçon 19, le manchon 18 comporte un tronçon intermédiaire 21 de plus grand diamètre extérieur, et dont l'extrémité avant s'applique sur la face d'entrée du tapis d'étanchéité 3 de façon à recouvrir en position montée l'évidement tronconique d'introduction 9 du passage 7 du tapis d'étanchéité 3.

Le manchon rigide 18 comporte enfin une partie arrière 22 pourvue d'une collerette d'extrémité 23 permettant l'accrochage de la partie d'extrémité avant 24 de plus grand diamètre d'une douille 25 élastiquement déformable, réalisée par exemple en un matériau élastomère, et dont la partie arrière 26, raccordée à la partie avant par une partie intermédiaire tronconique 27, s'applique élastiquement à ajustement serré sur la gaine du câble 11 . L'épaisseur de la paroi de la douille 25 dans sa partie intermédiaire 27 est plus faible que dans ses parties avant 24 et arrière 26.

On comprend ainsi que, du fait de la présence autour du câble, d'une part du manchon rigide 18, et d'autre part à l'arrière de celui-ci de la douille élastique 25, il n'existe aucun passage possible pour des contaminants autour du câble mis en place, même lors du recul de celui-ci dans la position illustrée à la partie inférieure de la figure 2.

Dans ce cas, en effet, le manchon rigide 18, et plus précisément son tronçon 19, est retenu dans le passage 7 correspondant du tapis d'étanchéité 3, et le câble 11 peut coulisser à l'intérieur de ce manchon en entraînant une déformation élastique axiale sous forme d'un allongement sans glissement de la douille 25.

## Revendications

1. Dispositif permettant d'assurer une étanchéité d'entrée d'un câble, notamment un câble optique, dans un élément de connecteur alvéolaire multicontacts, étanche, du type comportant un corps isolant pourvu d'une pluralité d'alvéoles agencées pour recevoir et retenir des contacts montés à l'extrémité de câbles et un tapis d'étanchéité, en matériau élastiquement déformable, disposé sur une face du corps isolant et présentant une pluralité de passages en regard des alvéoles, chacun des passages étant aligné avec une alvéole et étant extensible élastiquement en sens radial lors de l'introduction d'un câble, caractérisé par le fait qu'il comprend un manchon rigide (18) monté à jeu autour du câble (11) et une partie (20) du contact (10) monté à l'extrémité du câble, ledit manchon rigide (18) présentant une longueur supérieure à l'épaisseur du tapis d'étanchéité (3) de façon à dépasser, en position engagée dans le passage (7) du tapis d'étanchéité (3), au moins à l'arrière dudit tapis, et une douille (25) montée autour d'une partie (22) du manchon rigide (18) et d'une partie du câble (11) en arrière dudit manchon rigide, ladite douille (25) solidaire de manière étanche par sa partie avant (24) du manchon et par sa partie arrière (26) du câble étant élastiquement déformable dans sa partie intermédiaire (27) située entre lesdites parties avant (24) et arrière (26).

2. Dispositif selon la revendication 1, caractérisé par le fait que le manchon rigide (18) présente dans son tronçon (19) destiné à traverser le tapis d'étanchéité, un diamètre extérieur égal au diamètre extérieur du plus gros des câbles (6) pour lesquels les passages (7) du tapis d'étanchéité (3) sont conçus, de manière à permettre une retenue à force et sans jeu du manchon rigide dans le tapis d'étanchéité.

3. Dispositif selon l'une quelconque des revendications 1 et 2, caractérisé par le fait que le manchon rigide (18) comporte un tronçon intermédiaire (21) de plus grand diamètre extérieur, et dont l'extrémité avant s'applique sur la face d'entrée du tapis d'étanchéité.

4. Dispositif selon l'une quelconque des revendications précédentes, caractérisé par le fait que la douille (25) élastiquement déformable comporte une partie avant de plus grand diamètre (24) pourvue de moyens d'accrochage destinés à coopérer avec des moyens d'accrochage (23) sur la partie d'extrémité arrière (22) du manchon rigide, et une partie arrière (26) d'un diamètre intérieur nominal inférieur au diamètre extérieur du câble (11) pour s'appliquer élastiquement à force sur toute sa longueur sur le câble.

5. Dispositif selon l'une quelconque des revendications précédentes, caractérisé par le fait que la douille (25) présente dans sa partie intermédiaire (27) une épaisseur de paroi plus faible que dans ses parties avant (24) et arrière (26).

6. Dispositif selon l'une quelconque des revendications précédentes caractérisé par le fait qu'il est mis en oeuvre pour un câble optique (11) muni d'un contact femelle (10) dans lequel un embout (15) à l'extrémité duquel est immobilisée et collée la fibre optique (16) du câble est amené à reculer à l'encontre d'un ressort de compression (13) dans un corps tubulaire extérieur (12) du contact immobilisé dans une alvéole (2) d'un corps isolant (1) de l'élément de connecteur.

## Patentansprüche

1. Vorrichtung, die es gestattet, eine Dichtheit der Einführung eines Kabels, insbesondere eines optischen Kabels, in einen dichten, zelligen mehrpoligen Verbinder zu gewährleisten, mit einem isolierenden Körper, der mit mehreren Zellen versehen ist, die zur Aufnahme und zum Halten von am Ende von Kabeln angebrachten Kontakten ausgebildet sind, und einer Dichtmatte aus elastisch verformbarem Material, die auf einer Fläche des isolierenden Körpers angeordnet ist und mehrere den Zellen gegenüberliegende Durchlässe aufweist, von denen jeder mit einer Zelle ausgerichtet ist und bei der Einführung eines Kabels elastisch in Radialrichtung aufweitbar ist, dadurch **gekennzeichnet**, daß sie eine mit Spiel um das Kabel (11) und einen Teil (20) des am Ende des Kabels angebrachten Kontaktes (10) angeordnete starre Hülse (18), deren Länge größer ist als die Dicke der Dichtmatte (3), so daß sie in der Eingriffposition in dem Durchlaß (7) der Dichtmatte (3) mindestens nach hinten über die genannte Matte übersteht, und eine Tülle (25) aufweist, die um einen Teil (22) der starren Hülse (18) und einen Teil des Kabels (11) hinter der genannten starren Hülse herum angeordnet ist, wobei die Tülle (25), die mit ihrem vorderen Teil (24) an der Hülse und mit ihrem hinteren Teil (26) an dem Kabel dicht befestigt ist, in ihrem zwischen den genannten vorderen (24) und hinteren (26) Teilen liegenden mittleren Bereich (27) elastisch verformbar ist.

2. Vorrichtung nach Anspruch 1, dadurch **gekennzeichnet,** daß die starre Hülse (18) in ihrem zum Durchsetzen der Dichtmatte vorgesehenen Teilstück (19) einen Außendurchmesser aufweist, der gleich dem größten Außendurchmesser der Kabel (6) ist, für die die Durchlässe (7) der Dichtmatte (3) vorgesehen sind, so daß ein kraftschlüssiges und spielfreies Halten der starren Hülse in der Dichtmatte ermöglicht wird.

3. Vorrichtung nach Anspruch 1 oder 2, dadurch **gekennzeichnet,** daß die starre Hülse (18) ein mittleres Teilstück (21) mit größerem Außendurchmesser aufweist, dessen vorderes Ende an der Eintrittsfläche der Dichtmatte anliegt.

4. Vorrichtung nach einem der vorstehenden Ansprüche, dadurch **gekenn****zeichnet,** daß die elastisch verformbare Tülle (25) einen vorderen Teil (24) mit größerem Durchmesser, der mit Rastmitteln zum Zusammenwirken mit Rastmitteln (23) am hinteren Endabschnitt (22) der starren Hülse versehen ist, und einen hinteren Teil (26) aufweist, dessen nominaler Innendurchmesser kleiner als der Außendurchmesser des Kabels (11) ist, damit er sich auf seiner gesamten Länge elastisch, kraftschlüssig an das Kabel anlegt.

5. Vorrichtung nach einem der vorstehenden Ansprüche, dadurch **gekenn****zeichnet,** daß die Tülle (25) in ihrem mittleren Bereich (27) eine kleinere Wanddicke als in ihren vorderen (24) und hinteren (26) Teilen aufweist.

6. Vorrichtung nach einem der vorstehenden Ansprüche, dadurch **gekenn****zeichnet,** daß sie für ein optisches Kabel (11) eingesetzt wird, das mit einer Kontaktbuchse (10) versehen ist, in der ein Ansatz (15), an dessen Ende die optische Faser (16) des Kabels fixiert und angeklebt ist, gegen eine Druckfeder (13) in einem äußeren rohrförmigen Körper (12) der Kontaktbuchse, die in einer Zelle (2) des isolierenden Körpers (1) des Verbinders fixiert ist, zurückdrückbar ist.

## Claims

1. Device ensuring the seal of a cable entry, in particular for an optical cable, into a sealed alveolar multicontact connector element of the type comprising an insulating body fitted with a plurality of alveoli arranged to receive and retain the contacts mounted at the end of the cables and a sealing mat of elastically deformable material arranged on one face of the insulating body and having a plurality of passages opposite the alveoli, where each of the passages is aligned with an alveolus and can extend elastically in a radial direction when a cable is introduced, characterized in that it comprises a rigid sleeve (18) mounted with play around the cable (11) and a part (20) of the contact (10) mounted at the end of the cable, where the said rigid sleeve (18) has a length greater than the thickness of the sealing mat (3) so as to project, in its position engaged in the passage (7) of the sealing mat (3), at least behind the said mat, and a pin (25) mounted around a part (22) of the rigid sleeve (18) and a part of the cable (11) behind the said rigid sleeve, where the said pin (25) forms an integral sealed part of the sleeve by its front part (24) and of the cable by its rear part (26) being elastically deformable in its intermediate part (27) situated between the said front (24) and rear (26) parts.

2. Device according to Claim 1, characterized in that the rigid sleeve (18) has, in its section (19) designed to pass through the sealing mat, an external diameter equal to the largest external diameter of the cables ( 6) for which the passages (7) of the sealing mat (3) are designed, so as to allow retention by force and without play of the rigid sleeve in the sealing mat.

3. Device according to one of claims 1 and 2, characterized in that the rigid sleeve (18) comprises an intermediate section (21) of larger external diameter, the front end of which rests on the inlet face of the sealing mat.

4. Device according to one of the above claims, characterized in that the elastically deformable pin (25) comprises a front part of greater diameter (24) fitted with hooking means designed to cooperate with hooking means (23) on the rear end part (22) of the rigid sleeve, and a rear part (26) of nominal internal diameter smaller than the external diameter of the cable (11) to apply itself elastically with force to the cable over its entire length.

5. Device according to one of the above claims, characterized in that the pin (25) has in its intermediate part (27) a wall thickness smaller than at its front (24) and rear (26) parts.

6. Device according to one of the above claims, characterized in that it is used for an optical cable (11) fitted with a female contact (10) in which a ferrule, at the end of which the optical fibre (16) of the cable is immobilized and attached, is pressed against a compression spring (13) in an external tubular body (12) of the contact immobilized in an alveolus (2) of an insulating body (1) of the connector element.
